# EUROPÄISCHE PATENTSCHRIFT

(11) **EP 3 914 085 B1**
(45) Veröffentlichungstag und Bekanntmachung des Hinweises auf die Patenterteilung: **25.02.2026**
(21) Anmeldenummer: 19703021.6
(22) Anmeldetag: 24.01.2019
(51) Int. Cl.: A22C 17/00, A22C 17/04, A22C 25/14, A23L 17/00, A22C 25/08

(54) **VERFAHREN ZUR ERHÖHUNG DES GENUTZTEN FLEISCHANTEILS IN FISCHPRODUKTEN**
METHOD FOR INCREASING THE PROPORTION OF MEAT USED IN FISHPRODUCTS
PROCÉDÉ PERMETTANT D'AUGMENTER LA TENEUR DE VIANDE UTILISÉE DANS DES PRODUITS À BASE DE VIANDE DE POISSON

(43) Veröffentlichungstag der Anmeldung: 01.12.2021
(73) Patentinhaber: Nordischer Maschinenbau Rud. Baader GmbH + Co. KG, 23560 Lübeck (DE)
(72) Erfinder: MEINLSCHMIDT, Pia, 23556 Lübeck (DE); RIPPHAUSEN, Peter, 23611 Sereetz (DE); RUSKO, Torsten, 23923 Herrnburg (DE)
(74) Vertreter: Stork Bamberger Patentanwälte PartmbB
(86) Internationale Anmeldenummer: PCT/EP2019/051681
(87) Internationale Veröffentlichungsnummer: WO 2020/151822

(56) Entgegenhaltungen:
- EP-A1- 0 770 336
- EP-A1- 0 974 273
- WO-A1-84/00283
- US-A- 2 827 383
- US-A- 4 301 180
- US-A- 4 539 210
- US-A1- 2008 159 875
- US-A1- 2011 052 770

## Beschreibung

Die vorliegende Erfindung betrifft ein Verfahren zur Bearbeitung von in Mehrzahl entlang einer Bearbeitungslinie geförderten Hauptprodukten jeder Art und Form aus Fischfleisch. Dabei handelt es sich um Fleischprodukte, die neben den zu gewinnenden Hauptprodukten nicht verzehrbare oder vom Verzehr auszuschließende abzutrennende Bestandteile (Abtrennbestandteile) wenigstens einer Art sowie an diesen Abtrennbestandteilen verbleibende verzehrbare Beiprodukte enthalten, wobei die verzehrbaren Beiprodukte beim Abtrennen der Abtrennbestandteile von den Hauptprodukten an den Abtrennbestandteilen verbleiben.

In der fleischverarbeitenden Industrie fallen bei der Verarbeitung von Tieren zum einen gewünschte Teile an, die gewonnen werden sollen (Hauptprodukte), zum anderen die übrigen Teile. Letztere wiederum teilen sich in die vom Verzehr auszuschließenden abtrennbaren Teile (Abtrennbestandteile) und verzehrbare Beiprodukte. Der Ausdruck "vom Verzehr auszuschließen" bezieht sich dabei auf die Form, in der die Produkte direkt nach der Abtrennung von den gewünschten Teilen vorliegen. Solche vom Verzehr auszuschließenden abtrennbaren Teile sind z.B. Knochen oder Knorpel, Blut, Köpfe, Eingeweide und je nach Tierart ggf. auch Schuppen und/oder Haut, Flossen oder Bauchlappen. Diese sind in ihrer originären Form nicht verzehrbar, auch wenn sie nach entsprechender Verarbeitung, im Falle von Knochen z.B. zu Gelatine, für den Verzehr geeignet sein können. Unter die verzehrbaren Beiprodukte fällt insbesondere Fleisch, das bei der Abtrennung an den Knochen verbleibt, aber auch z.B. Fett. Der Begriff "Fleisch" im Sinne der vorliegenden Erfindung umfasst dabei Fischfleisch.

Der Fokus in der Fleischverarbeitung liegt derzeit üblicherweise auf den Hauptprodukten. Es geht darum, die Ausbeute an diesen größtmöglich zu gestalten. So werden Verfahren zum Abtrennen der Hauptbestandteile von den Abtrennbestandteilen immer weiter verbessert, um den Anteil an Hauptprodukten zu maximieren und den Anteil an verzehrbaren Beiprodukten zu minimieren.

Auch sind Verfahren bekannt, um das Gewicht und/oder den Nährstoffgehalt der Hauptprodukte durch Zusätze wie Wasser, Fette, Eiweiße oder andere Stoffe zu erhöhen. Solche Verfahren sind zum Beispiel in der DE 32 31 733 A1 oder der US 8,048,461 B2 beschrieben.

Bei den Beiprodukten handelt es sich überwiegend um hochwertiges Fleisch, das lediglich aufgrund des Umstandes, dass keine hundertprozentige Abtrennung von den Abtrennbestandteilen möglich ist, ausgeschleust und zum Beiprodukt wird. Das führt dazu, dass derzeit hochwertiges Fleisch häufig nicht dem menschlichen Verzehr zugeführt, sondern beispielsweise zu Tierfutter verarbeitet wird.

Um auch Beiprodukte zu nutzen, schlägt die US 4,301,180 ein Verfahren zur Herstellung von Thunfischstücken vor, bei dem der Thunfisch filetiert, die dunkelroten Fleischanteile abgetrennt und die Haut, Karkasse sowie Grätenteile mit anhaftendem rotem Fleisch von Gräten befreit und mit den dunklen Fleischanteilen feinzerkleinert werden. Der Brei wird gefärbt, mit Wasser gekocht, gebleicht, sehr fein zerkleinert und in die Seite der Thunfischfilets injiziert. Aufgrund der erforderlichen Verfahrensbedingungen leiden jedoch wertvolle Inhaltsstoffe der Beiprodukte.

Insbesondere vor dem Hintergrund des verantwortungsvollen Umgangs mit Lebensmitteln erscheint ein Umdenken dringend geboten. Die Menge an Rohstoff/Rohware, also das Tierfleisch, ist begrenzt. Diesen limitierten und hochwertigen Rohstoff gilt es so effizient wie möglich zu nutzen, insbesondere um die stark steigende Weltbevölkerung auch zukünftig ausreichend mit Proteinen versorgen zu können. Aufgabe der vorliegenden Erfindung war es daher, ein Verfahren sowie eine Vorrichtung zur Durchführung dieses Verfahrens zur Verfügung zu stellen, mit denen eine bessere Ausnutzung der hochwertigen Bestandteile eines Tieres möglich wird, während gleichzeitig die Qualität der erhaltenen Produkte, insbesondere im Hinblick auf Aussehen und Geschmack, gesteigert wird.

Diese Aufgabe wird durch ein Verfahren, wie es im unabhängigen Anspruch beschrieben ist, gelöst. Gegenstand der Unteransprüche sind vorteilhafte Fortbildungen des Erfindungsgegenstandes. Des Weiteren umfasst die Erfindung ein nach dem Verfahren erhältliches Produkt sowie eine Vorrichtung zur Durchführung des Verfahrens.

Demgemäß betrifft die Erfindung ein Verfahren zur Erhöhung des genutzten Fleischanteils bei der Produktion von in Mehrzahl entlang einer Bearbeitungslinie geförderten Hauptprodukten jeder Art und Form aus Fischfleisch, das neben den zu gewinnenden Hauptprodukten nicht verzehrbare oder vom Verzehr auszuschließende abzutrennende Bestandteile (Abtrennbestandteile) wenigstens einer Art sowie an diesen Abtrennbestandteilen verbleibende verzehrbare Beiprodukte enthält, wobei die verzehrbaren Beiprodukte beim Abtrennen der Abtrennbestandteile von den Hauptprodukten an den Abtrennbestandteilen verbleiben, umfassend folgende Schritte:
a) Beschicken einer Trenneinrichtung mit einer Charge Fischfleisch;
b) Abtrennen der Hauptprodukte dieser Charge von den Beiprodukte aufweisenden Abtrennbestandteilen dieser Charge;
c) Separieren der Beiprodukte von den Abtrennbestandteilen;
d) Herstellen einer Beiproduktlake aus den Beiprodukten durch Zerkleinerung der Beiprodukte und Vermischung mit Wasser, Stabilisator, optional Natriumchlorid und optional weiteren Bestandteilen;
e) Injizieren einer definierten Menge der in Schritt d) hergestellten Beiproduktlake in die Hauptprodukte, wobei Hauptprodukte und in der Beiproduktlake enthaltene Beiprodukte derselben Charge entstammen,

wobei alle Verfahrensschritte bei einer Temperatur von 0 bis 6°C, bevorzugt von 1 bis 6°C, durchgeführt werden und
der Zusatz an injizierter Beiproduktlake pro Hauptprodukt 7 bis 9,5 Gew.-% des Gesamtgewichts des Hauptproduktes beträgt.

Im Rahmen der vorliegenden Erfindung stellen die Erfinder somit ein Verfahren zur Verfügung, dass eine umfassendere Nutzung der Bestandteile eines Tieres im Rahmen des hochwertigen Hauptproduktes ermöglicht und so die Ausbeute an Hauptprodukt erhöht. Dadurch dass das verwendete Beiprodukt aus derselben Charge stammt wie das Hauptprodukt, kann außerdem sichergestellt werden, dass bei qualitativen Problemen nur die eine Charge betroffen ist und z.B. in dem Fall, dass qualitative Mängel im Hauptprodukt festgestellt werden, nicht mühsam ermittelt werden muss, wohin die Beiprodukte dieser Charge gelangt sind.

Besonders geeignet ist das vorliegende Verfahren für Fischfleisch, wobei das Hauptprodukt Fischfilet und der abzutrennende Bestandteil die Hauptgräte des Fisches ist. Fischfleisch wird in hohem Maße maschinell verarbeitet. Dabei fällt trotz immer weiter verfeinerter Abtrennverfahren für die Filets von der Hauptgräte nach wie vor Beiprodukt an, dessen Nutzung als qualitativ hochwertiges Produkt wünschenswert ist.

Als Ausgangsprodukt für das Verfahren kommen sowohl ganze Tiere als auch Tierkörper, die schon einem oder mehreren Bearbeitungsschritt(en) unterworfen wurden, wie auch Tierteile in Frage.

Idealerweise wird auf diese Weise das gesamte Beiprodukt dem Hauptprodukt wieder zugeführt. Es ist aber selbstverständlich ebenso möglich, dass nur Teile des Beiproduktes dem Hauptprodukt zugesetzt werden, zum Beispiel, wenn lebensmittelrechtliche Vorschriften dies erfordern oder zweckmäßig erscheinen lassen.

Das Beschicken der Trenneinrichtung (Schritt a)) erfolgt vorzugsweise maschinell, aber auch eine manuelle Beschickung ist möglich. In der Trenneinrichtung können ganze Tierkörper verarbeitet werden. Ebenso ist es möglich, dass vor dem Beschicken der Trenneinrichtung schon eine Bearbeitung (Entfernen der Innereien, Köpfen) erfolgt ist.

Abhängig von der verarbeiteten Tierart kann es vorteilhaft sein, dass das Abtrennen der Hauptprodukte (Schritt b)) nicht maschinell, sondern händisch durch Menschen erfolgt. Dies ist zum Beispiel insbesondere im Falle von Fisch bei Thunfisch nach wie vor üblich. Das erfindungsgemäße Verfahren umfasst auch solche, bei denen ein oder mehrere Schritt(e) manuell durchgeführt werden.

Durch das Separieren (Schritt c)) erhält man das Beiprodukt in Form von Partikeln. Das so erhaltene Produkt wird auch als Minze bezeichnet. Abhängig von der Tierart spricht man z.B. von Fischminze. Die mittlere Größe der nach dem Separieren erhaltenen Partikel ist ebenfalls von der Tierart abhängig und liegt vorzugsweise in einem Bereich von 2 mm bis 8 mm.

Besonders vorteilhaft ist das Verfahren, wenn Schritt d) des Verfahrens die Schritte
d1) des Vermischens von Beiprodukt, Wasser, Stabilisator, optional Natriumchlorid und optional weiteren Bestandteilen und
d2) des Zerkleinerns der Beiproduktlake auf einen maximale mittlere Teilchengröße von 3 mm, insbesondere von 2 mm, besonders bevorzugt von 1 mm,
umfasst.

Vorteilhaft ist außerdem eine mittlere Mindestteilchengröße von 1 µm, insbesondere 0,5 mm.

Mit dieser Teilchengröße ist eine gute Injizierbarkeit bei gleichzeitig sicherer Aufnahme der Beiproduktlake in dem Hauptprodukt gewährleistet. Das bedeutet, dass die Lake im Hauptprodukt erhalten bleibt, und zwar auch in weiteren Verarbeitungsschritten, sei es im Rahmen der Produktion bis zum verkaufsfertigen Endprodukt oder im Anschluss bei der Verwendung durch den Endverbraucher, also zum Beispiel beim Kochen oder Braten.

Abhängig von der verarbeiteten Tierart kann es vorteilhaft sein, zwischen Schritt b) und Schritt c) noch einen Schritt der Vorreinigung des Beiproduktes durchzuführen. Im Falle von Weißfisch zum Beispiel, ist es wünschenswert vor dem Separieren Blutgefäße zu entfernen, die bei dem Abtrennen der Hauptprodukte von den Beiprodukten an letzteren verbleiben und deren Qualität beeinträchtigen können. Gleiches gilt für die schwarze Bauchlappenhaut und/oder die Flossen, die aufgrund ihrer Farbe zu unerwünschten Verunreinigungen führen können.

Vorzugsweise werden die Hauptprodukte während der Schritte c) des Separierens und d) der Herstellung der Beiproduktlake in einem parallelen Schritt f) einer weiteren Bearbeitung unterzogen, wobei dieser Schritt f) der weiteren Bearbeitung insbesondere mindestens eine Bearbeitung, ausgewählt aus Trimmen, Enthäuten, Portionieren, Sortieren und Ausrichten, umfasst.

Auf diese Weise ist es möglich, das Hauptprodukt den Anforderungen durch den Kunden anzupassen. Hierzu gehört eine gewünschte Größe, aber auch das Vorhandensein oder Entfernen der Haut. Außerdem kann auf diese Weise eine weitere Veredelung des Hauptproduktes erfolgen. Handelt es sich bei dem zu verarbeitenden Tier beispielsweise um Fisch, ist die Weiterverarbeitung der sogenannten Standardfilets, die durch Abtrennen der Hauptgräte erhalten werden, durch Trimmen eine weitere Verarbeitung zu einem pinbonefreien Filet möglich. Ein Ausrichten kann insbesondere für den Schritt des Injizierens hilfreich sein, damit die Filets bestmöglich für das Eindringen der Injektionsnadeln positioniert sind.

Weiterhin ist es vorteilhaft, wenn sich an Schritt e) des Injizierens der Beiproduktlake ein Schritt g) des Reinigens des injizierten Hauptproduktes durch Entfernen überschüssiger Beiproduktlake, insbesondere mittels mindestens einem der Entfernverfahren Absaugen, Abspülen, Abwischen und Wegblasen, anschließt. Zum einen ist es auf diese Weise möglich, etwaig überschüssige Beiproduktlake zurückzuführen und so wiederzuverwenden, was die Verluste verringert und die Nachhaltigkeit des Verfahrens nochmals erhöht. Zum anderen wird auf diese Weise die Qualität, insbesondere die optische Qualität, des Produktes gesteigert, da überschüssige Beiproduktlake auf dem Hauptprodukt Flecken oder eine schleimige Schicht verursachen kann, die dazu führen, dass das Produkt vom Verbraucher als minderwertig wahrgenommen wird.

Nach der Reinigung kann sich als weiterer Schritt eine Tiefkühlung der fertigen Produkte anschließen.

Die erfindungsgemäße Temperaturführung bewirkt zum einen, dass die zu injizierende Lake ausreichend fließfähig ist, um eine gute Injektion zu gewährleisten. Zum anderen liegt der bevorzugte Temperaturbereich unterhalb der Temperatur, bei der die Proteine von Fisch gerinnen. So wird sichergestellt, dass nur native, also nicht denaturierte, Proteine verarbeitet werden, was die Qualität des Produktes noch einmal erhöht.

Ein weiterer Parameter, mit dem sich das erfindungsgemäße Verfahren vorteilhaft beeinflussen lässt, ist der pH-Wert. Vorteilhafterweise beträgt der pH-Wert der Beiproduktlake von 5,0 bis 9,0, insbesondere von 6,0 bis 8,0, besonders geeignet von 6,0 bis 7,0 und vorzugsweise von 6,0 bis 6,5. Ganz besonders bevorzugt beträgt er 6,45. Die Toleranz liegt jeweils bei +/- 0,03. Mit einem solchen pH-Wert wird eine Beiproduktlake erhalten, die besonders stabil und besonders gut injizierbar ist.

In einer weiteren besonders bevorzugten Ausführung werden zwei Hauptprodukte parallel verarbeitet, wobei die Hauptprodukte vom selben Tier stammen. Um den Umsatz zu erhöhen, ist es vorteilhaft, mehr als ein Hauptprodukt zur gleichen Zeit zu verarbeiten. Dabei lassen sich grundsätzlich beliebige Anzahlen von Hauptprodukten parallel, zum Beispiel durch Nebeneinanderförderung auf einem Transportband verarbeiten. Für den Injektionsprozess hat sich jedoch herausgestellt, dass bei zu großer Anzahl gleichzeitiger verarbeiteter Produkte die Genauigkeit nachlässt, d.h. es besteht die Möglichkeit, dass die Menge an zu injizierender Beiproduktlake nicht für jedes Hauptprodukt ideal ist. Besonders geeignet ist daher die parallele Verarbeitung von maximal vier, insbesondere zweier Hauptprodukte. Bei der Verarbeitung zweier Hauptprodukte, die vom selben Tier stammen, kommt vorteilhaft hinzu, dass diese Produkte normalerweise sehr ähnliche Eigenschaften einschließlich eines sehr ähnlichen Gewichts aufweisen. Die Anforderungen an die Menge zu injizierender Beiproduktlake sind daher für solche zwei Hauptprodukte ebenfalls sehr ähnlich, was zu guten Ergebnissen mit genauer Dosierung führt.

Für die Beiproduktlake werden die von den Abtrennbestandteilen abgetrennten Beiprodukte mit Wasser, mindestens einem Stabilisator, optional Natriumchlorid sowie optional weiteren Bestandteilen vermischt. Das Wasser ist dabei vorzugsweise Eiswasser. Dadurch ist eine Einstellung der Temperatur auf den für den Prozess bevorzugten Temperaturbereich von weniger als 10°C auf einfache Weise möglich. Ferner können Temperaturerhöhungen im Laufe des Prozesses, wie sie beispielsweise bei der Feinzerkleinerung auftreten, kompensiert werden. Wird der Zusatz von Natriumchlorid gewünscht, kann bevorzugt Meersalz zum Einsatz kommen. Natriumchlorid wird vorzugsweise in einer Menge zugesetzt, die dem NaCl-Gehalt des Hauptproduktes entspricht, in das die Beiproduktlake injiziert werden soll, so dass durch die Beiproduktlake in dieser Hinsicht keine Veränderung des Geschmacks erfolgt. Ebenso ist es möglich, eine beliebige andere Natriumchloridmenge zuzusetzen, die vom Abnehmer gewünscht ist.

Nach dem Vermischen der Bestandteile der Beiproduktlake wird diese einem Zerkleinerungsvorgang unterzogen. Dabei wird die Lake soweit zerkleinert, dass sie problemlos injiziert werden kann. Die maximale Teilchengröße wird dabei insbesondere durch den Durchmesser der Injektionsnadeln bestimmt. Zum anderen hat die Teilchengröße einen Einfluss auf die Viskosität der Beiproduktlake. Vorzugsweise beträgt die maximale mittlere Teilchengröße nach dem Zerkleinern 3 mm, insbesondere 2 mm und besonders bevorzugt 1 mm. Auch in Bezug auf die Mindestgröße der Teilchen haben sich bestimmte Werte als besonders geeignet herausgestellt. So ist eine mittlere Mindestteilchengröße von 1 µm, insbesondere 0,5 mm, besonders bevorzugt.

Die Viskosität der Beiproduktlake muss die einwandfreie Injektion der Beiproduktlake in die Hauptprodukte ermöglichen. So muss insbesondere im Falle von Fisch sichergestellt sein, dass es beim Injizieren der Beiproduktlake aufgrund hoher Viskosität und dem Druck, der dann erforderlich ist, um die Lake durch die Nadeln zu pressen, nicht zu einer Temperaturerhöhung kommt, die bewirkt, dass die Lakentemperatur 7°C überschreitet, weil dies zu einer unerwünschten Denaturierung der Fischproteine führen würde. Ein bevorzugter Bereich der dynamischen Viskosität bei 5°C beträgt von 1,52 m*Pa*s bis 10⁴ m*Pa*s, insbesondere von 10 m*Pa*s bis 10³ m*Pa*s. Die Messung erfolgt dabei bei einer Temperatur von 5°C und einem pH-Wert von 6,45.

Der Zerkleinerungsvorgang erfolgt in einer Feinzerkleinerungseinrichtung, die auch als Dispersionseinrichtung bezeichnet werden kann. Insbesondere kann es sich um eine Emulgiereinrichtung handeln.

Vorzugsweise ist der für die Beiproduktlake verwendete Stabilisator phosphatfrei. Da Phosphate als Risikofaktoren für Herz-Kreislauferkrankungen in die Kritik geraten sind, ist es vorteilhaft, dass bei der vorliegenden Erfindung auf deren Verwendung verzichtet werden kann.

Weiterhin bevorzugt ist der Stabilisator mindestens eine Verbindung, ausgewählt aus der Gruppe Hydrokolloide, Proteine, Emulgatoren, Spezialstärken, funktionelle Salze, funktionelle Lipide und Enzyme.

Als Hydrokolloide sind insbesondere zu nennen: Alginate, Xanthan, Cellulose, insbesondere CMC (Carboxymethylcellulose) und Hydroxypropylcellulose, Pektin, Agar-Agar, Carrageen, Johannisbrotkernmehl, Guarkernmehl, Konjak oder Tarakernmehl, Gelatine und Dextrane.

Besonders geeignete Proteine sind Sojaproteine sowie Ei- und Molkenproteine.

Geeignete Emulgatoren sind insbesondere Lecithine sowie Mono- und Diglyceride von Speisefettsäuren.

Beispiele für Spezialstärken sind Dextrin, acetylierte Stärke, acetyliertes Distärkeadipat, Hydroxyproplystärke, Distärkeglycerin oder acetylierte oxidierte Stärke.

Als funktionelle Salze sind insbesondere Carbonate, Acetate, Citrate, Ascorbate sowie die Salze oder Sulfate der Dicarbonsäuren und Hydroxysäuren zu nennen.

Besonders geeignet als funktionelle Lipide sind Phospholipide wie z.B. Lecithin, Mono- und Diglyceride, Glycolipide, Sorbitan-(Mono)-Fettsäureester, die unter der Bezeichnung "Span" vertrieben werden, und insbesondere Polyoxyethylen-Sorbitan-Fettsäureester (Polysorbate), die z.B. unter den Bezeichnungen "Tween", "Scattics" oder "Alkest" vertrieben werden.

Weitere Bestandteile, die der Beiproduktlake optional zugesetzt werden können, sind insbesondere Gewürze, Aromen, Farbstoffe oder Antioxidationsmittel. Dabei können als Antioxidationsmittel Ascorbinsäure oder Isoascorbinsäure und ihre jeweiligen Salze, Carnosol, Carnosolsäure sowie Citronensäure, Weinsäure, Ethylendiamintetraessigsäure und ihre jeweiligen Salze dienen.

Was die bevorzugte Menge an injizierter Beiproduktlake pro Hauptprodukt betrifft, ist diese von unterschiedlichen Faktoren wie insbesondere der Art des Produktes, der sensorischen Beurteilung des Produktes, aber auch lebensmittelrechtlichen Vorgaben abhängig. So wird für einen Zusatz von Beiproduktlake im Bereich von 7 bis zu 9,5 Gew.-% des Gesamtgewichts des injizierten Hauptproduktes mit zunehmender Beiproduktlake eine Verbesserung der sensorischen Eigenschaften beobachtet.

Besonders vorteilhaft weist die Beiproduktlake folgende Zusammensetzung auf:
- 68 bis 95 Gew.-%, bevorzugt 75 bis 90 Gew.-%, insbesondere 80 bis 85 Gew.-%, Wasser
- 0,1 bis 2 Gew.-%, bevorzugt 0,4 bis 1,5 Gew.-%, insbesondere 0,5 bis 1 Gew.-%, Stabilisator
- 5 bis 30 Gew.-%, bevorzugt 10 bis 25 Gew.-%, insbesondere 15 bis 20 Gew.-%, Beiprodukt
- 0 bis 1 Gew.-% Natriumchlorid
- 0 bis 2 Gew.-% weitere Bestandteile

Die Herstellung der Beiproduktlake kann sowohl im Batchbetrieb wie auch kontinuierlich erfolgen.

Das Injizieren der Beiproduktlake erfolgt vorzugsweise mit einem Druck von 0,4 bis 2,0 bar, insbesondere von 0,8 bis 1,8 bar, und besonders bevorzugt bei 1,6 bar.

Die Verfahrensschritte des erfindungsgemäßen Verfahrens sind so aufeinander abgestimmt oder synchronisiert, dass die Produktion der Beiproduktlake parallel zu etwaigen weiteren Bearbeitungsschritten und dem Transport der Hauptprodukte erfolgt.

Auf diese Weise ist es möglich, dass die Beiproduktlake, die den Hauptprodukten injiziert wird, Beiprodukte enthält, die derselben Charge entstammen wie die Hauptprodukte. Eine Charge kann dabei unterschiedlichste Größen haben. Insbesondere kann eine Charge den während einer Produktionsschicht verarbeiteten Tiere entsprechen, da nach einer Schicht üblicherweise eine Reinigung der Anlage erfolgt, so dass ein definierter Zeitpunkt für einen Wechsel durch äußere Umstände vorgegeben ist. Ein Chargenwechsel ist für den Zweig der Hauptprodukte einfacher durchzuführen als für die Beiprodukte und die Beiproduktlake, da für letztere eine Reinigung der eingesetzten Einrichtungen (Separiereinrichtung, Mischeinrichtung, Feinzerkleinerungseinrichtung) deutlich aufwendiger ist als für erstere. Daher ist alternativ denkbar, dass bei gewünschtem häufigeren Chargenwechsel mehr als eine Linie für die Beiprodukte/ Beiproduktlake zur Verfügung steht, so dass ein sofortiger Wechsel erfolgen kann, ohne eine Reinigung abwarten zu müssen. Diese kann dann erfolgen, während auf der zweiten Beiproduktlinie parallel die nächste Charge verarbeitet wird.

In einer bevorzugten Ausführungsform erfolgt die Synchronisation von Haupt- und Beiproduktlinie auf Basis der Mengensteuerung in Abhängigkeit davon, welche Menge an Beiprodukt in der Beiproduktlake enthalten sein soll.

Der Produktweg der Hauptprodukte und/oder der Beiprodukte kann mittels geeigneter Sensor- und/oder Beobachtungsmittel verfolgt werden, so dass zu beliebigen Zeitpunkten oder sogar fortwährend bekannt ist, wo sich ein bestimmtes Hauptprodukt befindet.

Vor und/oder nach dem Schritt des Injizierens können die Hauptprodukte vorteilhafterweise gewogen werden. Insbesondere wird sowohl vor dem Injizieren wie auch danach gewogen. Auf diese Weise lässt sich genau kontrollieren, wie viel Beiproduktlake in das Hauptprodukt gelangt ist. Das Wiegen nach dem Injizieren erfolgt vorzugsweise auch nach einem eventuell erfolgenden Reinigungsschritt, damit nur die Menge an Lake erfasst wird, die auch tatsächlich im Endprodukt enthalten ist. Aus den Wiegeergebnissen kann eine Rückmeldung für die Herstellung der Lake abgeleitet werden.

So kann beispielsweise der Beiproduktanteil bei Unter- oder Überschreiten eines bestimmten Gewichts erhöht oder verringert werden.

Für die Durchführung des Verfahrens der vorliegenden Erfindung kommt eine Vorrichtung zur Erhöhung des genutzten Fleischanteils bei der Produktion von in Mehrzahl entlang einer Bearbeitungslinie geförderten Hauptprodukten jeder Art und Form aus Fischfleisch zum Einsatz, umfassend:
- eine Trenneinrichtung zum Abtrennen von nicht verzehrbaren oder vom Verzehr auszuschließenden abzutrennenden Bestandteilen (Abtrennbestandteile) von den Hauptprodukten dieser Charge von den verzehrbare Beiprodukte aufweisenden Abtrennbestandteilen dieser Charge;
- eine Beiproduktlinie mit
   - einer Separiereinrichtung zum Separieren der Beiprodukte von den Abtrennbestandteilen;
   - einer Mischeinrichtung zum Mischen der Beiprodukte mit Wasser, Stabilisator, optional Natriumchlorid und optional weiteren Bestandteilen zur Erzeugung einer Beiproduktlake;
   - einer Feinzerkleinerungseinrichtung zum weiteren Zerkleinern der Beiprodukte in der Beiproduktlake;
   - einem ersten Transportmittelsystem mit mindestens einem Transportmittel zum Transportieren der Beiprodukte von der Trenneinrichtung über die Separiereinrichtung, die Mischeinrichtung und die Feinzerkleinerungseinrichtung zu einer Injektionseinrichtung;
- eine Injektionseinrichtung zum Injizieren einer definierten Menge der feinzerkleinerten Beiproduktlake in die Hauptprodukte,
- eine Hauptproduktlinie mit
   - einem zweiten Transportmittelsystem mit mindestens einem Transportmittel zum Transportieren der Hauptprodukte von der Trenneinrichtung zu der Injektionseinrichtung; und
- Synchronisierungsmittel zum Synchronisieren der Fördergeschwindigkeit in der Beiproduktlinie und der Fördergeschwindigkeit in der Hauptproduktline derart, dass die Beiprodukte, die in der Beiproduktlake enthalten sind, die den Hauptprodukten in der Injektionseinrichtung injiziert wird, derselben Charge entstammt wie die Hauptprodukte.

Dabei sorgen die Synchronisierungsmittel dafür, dass die Produktion der Beiproduktlake parallel zu etwaigen weiteren Bearbeitungsschritten und dem Transport der Hauptprodukte erfolgt. Die Synchronisierungsmittel können zum Beispiel als Mengensteuerung ausgebildet sein.

Die Injektionseinrichtung umfasst mehrere Injektionsnadeln, die in das Fleisch stechen und durch die die Beiproduktlake injiziert wird. Die Injektionsnadeln müssen einen Durchmesser aufweisen, der ausreichend groß ist, um die Lake verstopfungsfrei injizieren zu können. Auf der anderen Seite sollte der Durchmesser möglichst klein sein, um Beschädigungen am Hauptprodukt zu minimieren oder vorzugsweise ganz zu vermeiden. Der bevorzugte Durchmesser der Injektionsnadeln beträgt von 0,5 bis 3 mm, insbesondere von 1 bis 2 mm.

Vorzugsweise weist die Hauptproduktlinie mindestens eine weitere Einrichtung zum Bearbeiten des Hauptproduktes auf, insbesondere mindestens eine Einrichtung ausgewählt aus Trimmeinrichtung, Enthäuteeinrichtung, Portioniereinrichtung, Sortiereinrichtung und Ausrichteeinrichtung. Durch solche zusätzlichen Einrichtungen wird es möglich, ein speziell auf die Kundenwünsche angepassten Hauptprodukt herzustellen.

Weiterhin ist es vorteilhaft, wenn die Vorrichtung eine Reinigungseinrichtung aufweist, die der Injektionseinrichtung nachgeordnet ist, wobei die Reinigungseinrichtung ein Reinigungsmittel, ausgewählt aus Saugmittel, Abwaschmittel, Abwischmittel und Wegblasmittel, umfasst. Damit kann etwaig vorhandene Beiproduktlake entfernt werden.

Besonders bevorzugte Ausführungsformen des erfindungsgemäßen Verfahrens sowie der Vorrichtung werden anhand der beigefügten Zeichnung näher erläutert. In der Zeichnung zeigt:

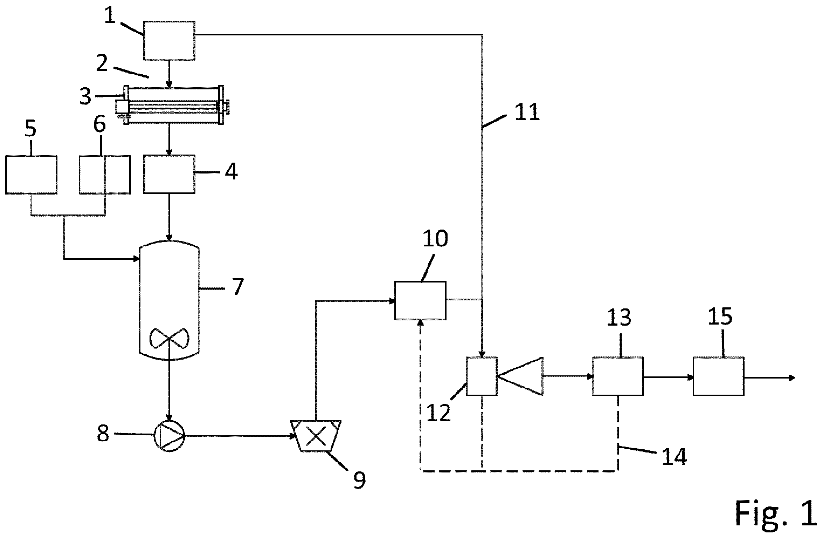

- Fig. 1: ein Ablaufdiagramm zum erfindungsgemäßen Verfahren.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig das erfindungsgemäße Verfahren und die erfindungsgemäße Vorrichtung weiterbilden können.

Im Folgenden wird die Erfindung am Beispiel der Lachsverarbeitung beschrieben. Das Hauptprodukt ist Lachsfilet.

Auf einer Trenneinrichtung 1 werden die Lachsfilets von der Hauptgräte getrennt. In einer nicht gezeigten Köpfeinrichtung werden in einem vorausgehenden Schritt die Köpfe vom Fischkörper getrennt. Außerdem sind bei Eintritt in die Trenneinrichtung 1 die Innereien bereits entfernt. Von der Trenneinrichtung 1 werden die Hauptgräten mit dem sich daran noch befindenden Lachsfleisch (Beiprodukt) auf der Beiproduktlinie 2 weiterverarbeitet. Zunächst wird die Hauptgräte mit dem Beiprodukt einer Separiereinrichtung 3 zugeführt. Die Temperatur beim Separiervorgang liegt unterhalb von 10°C. In der Separiereinrichtung wird das Beiprodukt-Lachsfleisch von der Hauptgräte getrennt. Beim Verlassen der Separiereinrichtung weist die sogenannte Fischminze eine Partikelgröße zwischen 2 und 6 mm auf. Die Fischminze kann zur Zwischenlagerung einem Zwischenspeicher 4 zugeführt werden. Die Temperatur im Zwischenspeicher 4 ist kleiner als 10°C, eine Temperatur zwischen 4 und 5°C ist besonders geeignet.

Von dem Zwischenspeicher 4 wird die Fischminze der Mischeinrichtung 7 zugeführt. In dieser Mischeinrichtung erfolgt ein Vermischen mit Eiswasser aus Wassertank 5 sowie dem Stabilisator und Salz aus dem Behälter 6 für Stabilisator und trockene Komponenten. Salz muss nicht notwendigerweise zugegeben werden. Ebenso ist es möglich, dass weitere trockene Komponenten zugegeben werden. Die Eiswasserlösung, die der Mischeinrichtung 7 zugeführt wird, hat einen pH-Wert im Bereich von 7 bis 8. In der Mischeinrichtung 7 werden Fischminze und Eiswasserlösung vermischt. Die Temperatur in der Mischeinrichtung ist kleiner als 5°C. Der pH-Wert liegt im Bereich von 6 bis 8. Die Zusammensetzung der Lachslake war wie folgt:
- 81,4 Gew.-% Wasser
- 18 Gew.-% Lachsminze
- 0,6 Gew.-% Stabilisator

Als Stabilisator kam HydroTOP SB 15 der Firma Hydrosol zum Einsatz.

Über die Pumpe 8 gelangt die so erzeugte Lachslake in die Feinzerkleinerungseinrichtung 9. Hier wird die Lake auf eine Partikelgröße von 1 bis 2 mm zerkleinert. Durch den Zerkleinerungsvorgang steigt die Temperatur der Lake um bis zu 3 K an. Von der Feinzerkleinerungseinrichtung 9 wird die Fischlake zum Injektionstank 10 gefördert. Hier erfolgt eine Kühlung der Fischlake, so dass diese eine Temperatur von unter 7°C, insbesondere von 5 bis 6°C aufweist.

Parallel zur Herstellung der Fischlake werden die Lachsfilets auf der Hauptproduktlinie 11 gefördert. Dabei können sie direkt zur Injektionseinrichtung 12 transportiert werden. Ebenso ist es möglich, dass sie vor dem Injizieren weitere Verfahrensschritte und die entsprechenden Einrichtungen (nicht gezeigt) durchlaufen. So können die Filets weiter veredelt werden, indem sie z.B. getrimmt werden, d.h. indem weitere Gräten und/oder Bauchflossen und/oder das Rückenfett entfernt werden. Eine weitere Möglichkeit ist das Enthäuten.

Vor dem Eintritt in die Injektionseinrichtung 12 werden die Lachsfilets auf einer (nicht gezeigten) Wiegeeinrichtung gewogen. In der Injektionseinrichtung 12 wird dann die Fischlake über Injektionsnadeln in die Fischfilets injiziert. Dies geschieht bei einem Druck im Bereich von 0,4 bis 2,0 bar. Etwaige überschüssige Fischlake wird über einen Rezirkulationskreis 14 zurück zum Injektionstank 10 geführt. Nach der Injektion weisen die Fischfilets üblicherweise überschüssige Fischlake auf. Dieses ist zum einen für den optischen Eindruck nachteilig, zum anderen ist Fischlake verbraucht, ohne dauerhaft im Produkt enthalten zu sein, da Fischlake auf der Oberfläche beim Waschen und insbesondere beim Kochen oder Braten entfernt wird. Daher wird das Fischfilet der Reinigungsvorrichtung 13 zugeführt, wo das Filet gereinigt wird. Dies kann mittels eines sogenannten "Air Knifes" erfolgen, mit dem zunächst Wasser aufgebracht und im Anschluss zusammen mit der überschüssigen Lake abgesaugt wird. Die überschüssige Lake wird ebenfalls über den Rezirkulationskreis 14 zurück zum Injektionstank geführt.

Nach der Reinigung wird das Fischfilet nochmals auf einer (nicht gezeigten) Wiegeeinrichtung gewogen, bevor es in einer Gefriereinrichtung 15 tiefgekühlt wird.

## Patentansprüche

1. Verfahren zur Erhöhung des genutzten Fleischanteils bei der Produktion von in Mehrzahl entlang einer Bearbeitungslinie geförderten Hauptprodukten jeder Art und Form aus Fischfleisch, das neben den zu gewinnenden Hauptprodukten nicht verzehrbare oder vom Verzehr auszuschließende abzutrennende Bestandteile (Abtrennbestandteile) wenigstens einer Art sowie an diesen Abtrennbestandteilen verbleibende verzehrbare Beiprodukte enthält, wobei die verzehrbaren Beiprodukte beim Abtrennen der Abtrennbestandteile von den Hauptprodukten an den Abtrennbestandteilen verbleiben, umfassend folgende Schritte:
a) Beschicken einer Trenneinrichtung (1) mit einer Charge Fischfleisch;
b) Abtrennen der Hauptprodukte dieser Charge von den Beiprodukte aufweisenden Abtrennbestandteilen dieser Charge;
c) Separieren der Beiprodukte von den Abtrennbestandteilen;
d) Herstellen einer Beiproduktlake aus den Beiprodukten durch Zerkleinerung der Beiprodukte und Vermischung mit Wasser, Stabilisator, optional Natriumchlorid und optional weiteren Bestandteilen;
e) Injizieren einer definierten Menge der in Schritt d) hergestellten Beiproduktlake in die Hauptprodukte, wobei Hauptprodukte und in der Beiproduktlake enthaltene Beiprodukte derselben Charge entstammen,
**dadurch gekennzeichnet, dass** alle Verfahrensschritte bei einer Temperatur von 0 bis 6°C, bevorzugt von 1 bis 6°C, durchgeführt werden und
dass der Zusatz an injizierter Beiproduktlake pro Hauptprodukt 7 bis 9,5 Gew.-% des Gesamtgewichts des Hauptproduktes beträgt.

2. Verfahren nach Anspruch 1, **dadurch gekennzeichnet, dass** Schritt d) des Herstellens der Beiproduktlake die Schritte
d1) des Vermischens von Beiprodukt, Wasser, Stabilisator, optional Natriumchlorid und optional weiteren Bestandteilen und
d2) des Zerkleinerns der Beiproduktlake auf einen maximale mittlere Teilchengröße von 3 mm, insbesondere von 2 mm, besonders bevorzugt von 1 mm,
umfasst.

3. Verfahren nach Anspruch 1 oder 2, **dadurch gekennzeichnet, dass** die Hauptprodukte während der Schritte c) des Separierens und d) der Herstellung der Beiproduktlake in einem parallelen Schritt f) einer weiteren Bearbeitung unterzogen werden, wobei dieser Schritt f) der weiteren Bearbeitung insbesondere mindestens eine Bearbeitung, ausgewählt aus Trimmen, Enthäuten, Portionieren, Sortieren und Ausrichten, umfasst.

4. Verfahren nach einem der Ansprüche 1 bis 3, **dadurch gekennzeichnet, dass** sich an Schritt e) des Injizierens der Beiproduktlake ein Schritt g) des Reinigens des injizierten Hauptproduktes durch Entfernen überschüssiger Beiproduktlake, insbesondere mittels mindestens einem der Entfernverfahren Absaugen, Abspülen, Abwischen und Wegblasen, anschließt.

5. Verfahren nach einem der Ansprüche 1 bis 4, **dadurch gekennzeichnet, dass** das Hauptprodukt Fischfilet und der abzutrennende Bestandteil die Hauptgräte des Fisches ist.

6. Verfahren nach einem der Ansprüche 1 bis 5, **dadurch gekennzeichnet, dass** der pH-Wert der Beiproduktlake von 6,0 bis 8,0, insbesondere von 6,0 bis 7,0, vorzugsweise von 6,0 bis 6,5 und besonders bevorzugt 6,45 beträgt.

7. Verfahren nach einem der Ansprüche 1 bis 6, **dadurch gekennzeichnet, dass** zwei Hauptprodukte parallel verarbeitet werden, wobei die Hauptprodukte vom selben Tier stammen.

8. Verfahren nach einem der Ansprüche 1 bis 7, **dadurch gekennzeichnet, dass** der Stabilisator phosphatfrei ist.

9. Verfahren nach einem der Ansprüche 1 bis 8, **dadurch gekennzeichnet, dass** der Stabilisator mindestens eine Verbindung, ausgewählt aus der Gruppe Hydrokolloide, Proteine, Emulgatoren, Spezialstärken, funktionelle Salze, Fasern, Ballaststoffe, funktionelle Lipide und Enzyme, ist.

## Claims

1. Method for increasing the proportion of meat used in the production of principal products of any kind and form conveyed in plurality along a processing line and consisting of fish meat which contains, in addition to the principal products to be obtained, inedible components or components to be excluded from consumption which are to be removed (removal components) of at least one kind and also contains edible by-products remaining on said removal components, wherein the edible by-products remain on the removal components when the removal components are removed from the principal products, said method comprising the following steps:
a) loading a separating device (1) with a batch of fish meat;
b) separating the principal products of this batch from the removal components, comprising by-products, of said batch;
c) separation of the by-products from the removal components;
d) producing a by-product brine from the by-products by comminuting the by-products and mixing same with water, stabiliser, optionally sodium chloride and optionally other components;
e) injecting a defined quantity of the by-product brine produced in step d) into the principal products, wherein principal products and by-products contained in the by-product brine come from the same batch,
**characterised in that** all method steps are carried out at a temperature from 0 to 6 °C, preferably from 1 to 6 °C and that the addition of injected by-product brine per principal product amounts to 7 to 9.5% by weight of the total weight of the principal product.

2. Method according to Claim 1, **characterised in that** step d) of producing the by-product brine comprises the steps
d1) of mixing by-product, water, stabiliser, optionally sodium chloride and optionally other components and
d2) of comminuting the by-product brine to a maximum mean particle size of 3 mm, in particular of 2 mm, especially preferably of 1 mm.

3. Method according to claim 1 or 2, **characterised in that** the principal products, during the steps c) of separation and d) of producing the by-product brine, are subjected in a parallel step f) to further processing, wherein this step f) of further processing comprises in particular at least one process selected from trimming, skinning, portioning, sorting and aligning.

4. Method according to any one of claims 1 to 3, **characterised in that** step e) of injecting the by-product brine is followed by a step g) of cleaning the injected principal product by removing excess by-product brine, in particular by means of at least one of the removal methods of suction, rinsing, wiping and blowing away.

5. Method according to any one of claims 1 to 4, **characterised in that** the principal product is fish fillet and the component to be removed is the backbone of the fish.

6. Method according to any one of claims 1 to 5, **characterised in that** the pH value of the by-product brine is from 6.0 to 8.0, in particular from 6.0 to 7.0, preferably from 6.0 to 6.5, and especially preferably is 6.45.

7. Method according to any one of claims 1 to 6, **characterised in that** two principal products are processed in parallel, wherein the principal products originate from the same animal.

8. Method according to any one of claims 1 to 7, **characterised in that** the stabiliser is phosphate-free.

9. Method according to any one of claims 1 to 8, **characterised in that** the stabiliser is at least a compound selected from the group comprising of hydrocolloids, proteins, emulsifiers, special starches, functional salts, fibres, dietary fibres, functional lipids and enzymes.

## Revendications

1. Procédé pour augmenter la proportion de chair utilisée lors de la production de produits principaux de chaque type et forme à base de chair de poisson, transportés en pluralité le long d'une chaîne de traitement, qui, outre les produits principaux à obtenir, contiennent des composants non comestibles ou à exclure de la consommation à séparer (composants à séparer) d'au moins un type, ainsi que des sous-produits comestibles restant sur ces composants à séparer, les sous-produits comestibles restant sur les composants à séparer lors de la séparation des composants à séparer des produits principaux, comprenant les étapes suivantes :
a) l'alimentation d'un dispositif de séparation (1) avec une charge de chair de poisson ;
b) la séparation des produits principaux de cette charge des composants à séparer de cette charge présentant les sous-produits ;
c) l'extraction des sous-produits des composants à séparer ;
d) la préparation d'une saumure de sous-produits à partir des sous-produits par broyage des sous-produits et mélange avec de l'eau, un stabilisateur, éventuellement du chlorure de sodium et éventuellement d'autres composants ;
e) l'injection d'une quantité définie de la saumure de sous-produits préparée à l'étape d) dans les produits principaux, les produits principaux et les sous-produits contenus dans la saumure de sous-produits provenant de la même charge,
**caractérisé en ce que** toutes les étapes de procédé sont réalisées à une température de 0 à 6 °C, de préférence de 1 à 6 °C, et
**en ce que** l'ajout de saumure de sous-produits injectée par produit principal représente 7 à 9,5 % en poids du poids total du produit principal.

2. Procédé selon la revendication 1, **caractérisé en ce que** l'étape d) de préparation de la saumure de sous-produits comprend les étapes
d1) de mélange de sous-produit, d'eau, de stabilisateur, éventuellement de chlorure de sodium et éventuellement d'autres composants, et
d2) de broyage de la saumure de sous-produits à une taille de particule moyenne maximale de 3 mm, notamment de 2 mm, de manière particulièrement préférée de 1 mm.

3. Procédé selon la revendication 1 ou 2, **caractérisé en ce que** les produits principaux sont soumis à un traitement supplémentaire dans une étape f) parallèle pendant les étapes c) de séparation et d) de préparation de la saumure de sous-produits, cette étape f) de traitement supplémentaire comprenant notamment au moins un traitement choisi parmi le parage, l'élimination de la peau, le portionnement, le tri et l'alignement.

4. Procédé selon l'une quelconque des revendications 1 à 3, **caractérisé en ce que** l'étape e) d'injection de la saumure de sous-produits est suivie d'une étape g) de nettoyage du produit principal injecté par élimination de l'excès de saumure de sous-produits, notamment au moyen d'au moins l'un des procédés d'élimination aspiration, rinçage, essuyage et soufflage.

5. Procédé selon l'une quelconque des revendications 1 à 4, **caractérisé en ce que** le produit principal est un filet de poisson et le composant à séparer est l'arête principale du poisson.

6. Procédé selon l'une quelconque des revendications 1 à 5, **caractérisé en ce que** le pH de la saumure de sous-produits est de 6,0 à 8,0, notamment de 6,0 à 7,0, de préférence de 6,0 à 6,5 et de manière particulièrement préférée de 6,45.

7. Procédé selon l'une quelconque des revendications 1 à 6, **caractérisé en ce que** deux produits principaux sont traités en parallèle, les produits principaux provenant du même animal.

8. Procédé selon l'une quelconque des revendications 1 à 7, **caractérisé en ce que** le stabilisateur est exempt de phosphate.

9. Procédé selon l'une quelconque des revendications 1 à 8, **caractérisé en ce que** le stabilisateur est au moins un composé choisi dans le groupe des hydrocolloïdes, des protéines, des émulsifiants, des amidons spéciaux, des sels fonctionnels, des fibres, des fibres alimentaires, des lipides fonctionnels et des enzymes.
